# EUROPEAN PATENT APPLICATION

(11) **EP 4 806 642 A1**
(43) Date of publication of application: **16.09.2026**
(21) Application number: 25205720.3
(22) Date of filing: 30.09.2025
(51) Int. Cl.: B41F 16/00

(54) **VACUUM THERMAL TRANSFER DEVICE**

(30) Priority: 14.03.2025 CN 202520445421 U
(71) Applicant: Cavaliere, Roberto, Zhaoqing City (CN)
(72) Inventor: Cavaliere, Roberto, Zhaoqing City (CN)
(74) Representative: Chung, Hoi Kan

(57) **Abstract**

The present invention discloses a vacuum thermal transfer device for sheet materials comprising a frame 1, a vacuum pump unit 2, a heat-conducting box 3 and a transfer assembly, wherein the frame 1 is provided with lifting driving mechanisms 4, at least one conveying mechanism 6, a first heating mechanism 51 and a second heating mechanism 52; the first heating mechanism 51 is provided above a heat-conducting conveyor belt 65 of the conveying mechanism 6 and the heat-conducting conveyor belt 65 of the conveying mechanism 6 is arranged to be in contact with at least one heating surface of the second heating mechanism 52 provided below the heat-conducting conveyor belt 65; the heat-conducting box 3 is positioned on the heat-conducting conveyor belt 65, the transfer assembly is provided over the heat-conducting box 3 to enclose and form a sealed heating chamber, at least one sheet material to be processed that is arranged in the sealed heating chamber, and a transfer member in the transfer assembly is positioned above the sheet material to be processed; the lifting driving mechanisms 4 are connected to the first heating mechanism 51 for driving the first heating mechanism 51 to move and abut against the transfer assembly; at least one side of the heat-conducting box 3 is provided with vacuum pipes connected to the sealed heating chamber, and the vacuum pipes are connected to the vacuum pump unit 2 through a pipeline. The present invention enables the transfer of patterns or designs on a plurality of surfaces of the sheet materials to be processed, allowing sheet materials aesthetically pleasing.

## Description

### Technical Field

The present application relates to the technical field of stone sheet material processing, and in particular to a vacuum thermal transfer device for sheet materials.

### Background Technology

Thermal transfer is a technology for decorating the surface and edges of stone slabs and countertops with individual patterns and textures. The technology is carried out by using thermal transfer device that heats and applies pressure to a patterned transfer paper or transfer film, causing it to bond to a surface of artificial stone to form a decorative pattern.

A current thermal transfer device usually comprises a heating unit, a pressure unit and a control system, the heating unit including an upper heating plate and a lower heating plate. In an operation process, the transfer paper or transfer film with a pattern or design is placed on an upper surface of the quartz plate, and then the quartz plate disposed on a lower heating plate is pressed downwardly by an upper heating plate, so that the transfer paper or transfer film is bonded to the upper surface of the quartz plate by heating and applying pressure to form a decorative pattern or design. However, as requirements of users become higher and higher, the quartz plates with single-sided patterns or designs processed and produced by the above device have gradually failed to meet needs of users. Therefore, there is an urgent need for a thermal transfer device that can realize multi-sided thermal transfer patterns or designs on plates.

### Summary of the Invention

The technical problem to be solved by the present invention is to provide a vacuum thermal transfer device for sheet materials, which can realize the transfer of patterns or designs on multiple surfaces and edges of sheet materials to be processed, allowing sheet materials aesthetically pleasing and satisfying the gradually increasing requirements of users.

In order to solve the above technical problems, the present invention provides a vacuum thermal transfer device for sheet materials comprising a frame, a vacuum pump unit, a heat-conducting box and a transfer assembly, wherein the frame is provided with lifting driving mechanisms, at least one heating mechanism, and at least one conveying mechanism, the heating mechanism comprises a first heating mechanism and a second heating mechanism; the first heating mechanism is provided above a heat-conducting conveyor belt of the conveying mechanism and the heat-conducting conveyor belt of the conveying mechanism is arranged to be in contact with at least one heating surface of the second heating mechanism provided below the heat-conducting conveyor belt; the heat-conducting box is positioned on the heat-conducting conveyor belt, the transfer assembly is covered over the heat-conducting box to enclose and form a sealed heating chamber, at least one sheet material to be processed is arranged to be jacked up in the sealed heating chamber, and a transfer member in the transfer assembly is arranged to be positioned above the sheet material to be processed; the lifting driving mechanisms are connected to the first heating mechanism for driving the first heating mechanism to move and abut against the transfer assembly; at least one side of the heat-conducting box is provided with vacuum pipes connected to the sealed heating chamber, and the vacuum pipes are connected to the vacuum pump unit through a pipeline.

As an improvement of the above solution, the transfer assembly comprises a heat-conducting gland plate and involves a transfer member, the heat-conducting gland plate being covered over the heat-conducting box to enclose and form the sealed heating chamber; the transfer member is arranged to be provided in the sealed heating chamber and arranged to be laid on the sheet material to be processed, and a horizontal dimension of the transfer member is greater than the horizontal dimension of the sheet material to be processed.

As an improvement of the above solution, the transfer assembly comprises a heat-conducting hollow frame and involves a transfer member, with the transfer member being arranged to be laid on the heat-conducting box and the transfer member having a horizontal dimension greater than or equal to the dimension of the heat-conducting box; the heat-conducting hollow frame is arranged to press the transfer member onto the heat-conducting box to enclose and form the sealed heating chamber.

As an improvement of the above solution, a bottom end surface within the heat-conducting box is provided with protrusion arrays configured to jack up the sheet material to be processed, the protrusion arrays comprising a plurality of projections arranged in an array.

As an improvement of the above solution, a plurality of vacuum pipes are provided at intervals on one side or both sides of the heat-conducting box.

As an improvement of the above solution, an upper portion of the heat-conducting box is provided with at least one sealing installation groove surrounding an opening of the heat-conducting box, and at least one sealing ring is provided in the sealing installation groove.

As an improvement of the above solution, the transfer member is a PVC film, a PET film or a PETG film with a pattern or a design; the sheet material to be processed is a flat sheet material or a flat sheet material with a hollow structure.

As an improvement of the above solution, the conveying mechanism is configured to convey a fed heat-conducting box to a designated processing position and convey the heat-conducting box after thermal transfer outward, the conveying mechanism comprising conveying frames, a conveying driving unit, a driving roller, a driven roller and a heat-conducting conveyor belt; the conveying frames are respectively installed on both sides of the frame, and the conveying frames on both sides are respectively installed with the driving roller and the driven roller, the driving roller is connected with the driven roller through the heat-conducting conveyor belt in a transmission way, and the conveying driving unit is connected with the driving roller in a transmission way; an area enclosed by the heat-conducting conveyor belt is provided with the second heating mechanism, at least one heating surface of the second heating mechanism being arranged to be in contact with the heat-conducting conveyor belt. As an improvement of the above solution, a plurality of the lifting drive mechanisms are provided around the frame, the lifting driving mechanisms comprising lifting driving units mounted on the frame, driving rods of the lifting drive units being connected to said first heating mechanism; the first heating mechanism comprises an upper heat-conducting frame connected to the driving rods of the lifting driving mechanisms, a heat-conducting layer member is provided at a lower portion of the upper heat-conducting frame, a heating installation area is formed between the upper heat-conducting frame and the heat-conducting layer member, a first insulation layer plate and a first electric heat-conducting plate are provided in the heating installation area, and two ends of the first electric heat-conducting plate are respectively arranged to abut the first insulation layer plate and the heat-conducting layer member.

As an improvement of the above solution, the second heating mechanism comprises a lower heat-conducting frame installed on the frame, and a second insulation layer plate and a second electric heat-conducting plate are installed on the lower heat-conducting frame, and two ends of the second electric heat-conducting plate are respectively arranged to abut against the second insulation layer plate and the upper heat-conducting conveyor belt.

The present invention boasts for the following beneficial effects:
According to the embodiments of the present invention, a sealed heating chamber can be formed by a combination of a heat-conducting box and a heat-conducting assembly. The lifting driving mechanisms and the first heating mechanism can exert pressure on the heat-conducting assembly to facilitate the sealing connection between the heat-conducting box and the heat-conducting assembly, thereby avoiding the stable operation of a vacuum thermal transfer work being affected by air leakage. Under the joint action of the first heating mechanism, the second heating mechanism and the vacuum pump unit, the sealed heating chamber can be kept in a vacuum and high-temperature working state, thereby improving the efficiency of thermal transfer processing. The transfer member in this environment will shrink due to heat and be adsorbed on upper surfaces and other multiple side surfaces of lifted sheet materials to be processed, thereby realizing image or pattern transfer on multiple surfaces of the sheet material to be processed, allowing sheet materials aesthetically pleasing and satisfying the gradually increasing requirements of users, and making the sheet material practical. In addition, the conveying mechanism can transport the heat-conducting box fed from outside to a designated processing position, and transport the heat-conducting box after thermal transfer to a next workstation. It can be seen that an entire sheet material movement process does not require manual handling, which effectively improves the work safety of personnel and thus improves the safety of the use of a thermal transfer device.

### Brief Description of the Drawings

Figure 1 is a schematic diagram of a structure of a vacuum thermal transfer device for sheet materials according to a first embodiment of the present invention;
Figure 2 is a schematic diagram of the structure of a transfer assembly and a heat-conducting box of Figure 1;
Figure 3 is an enlarged schematic view of a portion A of Figure 1;
Figure 4 is a three-dimensional schematic diagram of the vacuum thermal transfer device for sheet materials of Figure 1;
Figure 5 is a schematic side view of the vacuum thermal transfer device for sheet materials of Figure 1;
Figure 6 is a schematic cross-sectional view of the vacuum thermal transfer device for sheet materials of Figure 1;
Figure 7 is an enlarged schematic view of a portion A of Figure 4;
Figure 8 is an enlarged schematic view of a portion A of Figure 6;
Figure 9 is a schematic diagram of a connection structure of universal joints of the present invention;
Figure 10 is a schematic diagram of the structure of the vacuum thermal transfer device for sheet materials according to a second embodiment of the present invention;
Figure 11 is a schematic diagram of the structures of the transfer assembly and the heat-conducting box of Figure 10.

### Specific Embodiments

In order to clarify the objects, technical solutions and advantages of the present invention, the present invention will be described in further detail below with reference to the accompanying drawings.

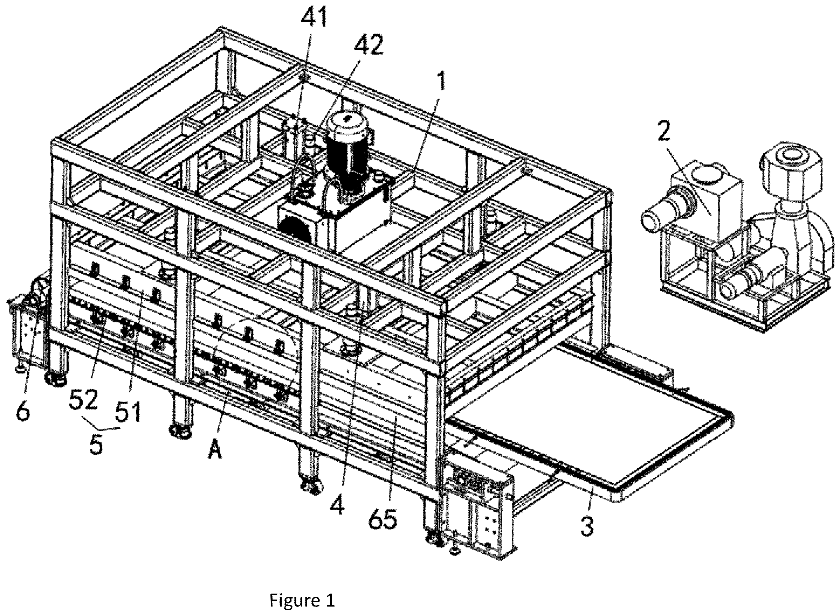

As shown in Figures 1 to 2, a schematic diagram of a structure of a vacuum thermal transfer device for sheet materials according to a first embodiment of the present invention is provided, the present invention comprising a frame 1, a vacuum pump unit 2, a heat-conducting box 3 and a transfer assembly 9, wherein the frame 1 is provided with lifting driving mechanisms 4, at least one heating mechanism 5, and at least one conveying mechanism 6, the heating mechanism 5 comprising a first heating mechanism 51 and a second heating mechanism 52; the first heating mechanism 51 is provided above a heat-conducting conveyor belt 65 of the conveying mechanism 6 and the heat-conducting conveyor belt 65 of the conveying mechanism 6 is arranged to be in contact with at least one heating surface of the second heating mechanism 52 provided below the heat-conducting conveyor belt 65 to achieve heat conduction; the heat-conducting box 3 is positioned on the heat-conducting conveyor belt 65, the transfer assembly 9 is covered over the heat-conducting box 3 to enclose and form a sealed heating chamber 35, at least one sheet material to be processed that is jacked up is arranged in the sealed heating chamber 35, and a transfer member 92 in the transfer assembly 9 is positioned above the sheet material to be processed; a gap is left between a lifted sheet material to be processed 8 and a bottom end surface of the heat-conducting box 3 to provide space for the transfer member 92 to move during contraction and adsorption.

The transfer assembly 9 comprises a heat-conducting gland plate 1 and involves a transfer member 2, the heat-conducting gland plate 91 being covered over the heat-conducting box 3 to enclose and form the sealed heating chamber 35; the transfer member 92 is provided in the sealed heating chamber 35 and laid on the plate to be processed, and a horizontal dimension of the transfer member 92 is greater than the horizontal dimension of the sheet material to be processed. The horizontal dimension of the transfer member 92 is larger than the horizontal dimension of the sheet material to be processed 8, so to facilitate the transfer of patterns or designs to a side of the sheet material to be processed 8.

The lifting driving mechanism 4 is connected to the first heating mechanism 51 to drive the first heating mechanism 51 to move and abut against the heat-conducting gland plate 91. By applying pressure to the heat-conducting gland plate 91, sealing connection strength between the heat-conducting gland plate 91 and the heat-conducting box 3 can be strengthened, thereby improving a sealing effect of the sealed heating chamber 35 and avoiding the stable operation of the vacuum thermal transfer work being affected by air leakage. A heating surface of the first heating mechanism 51 is arranged to face the heat-conducting gland plate 91 to transfer heat to the heat-conducting box through the heat-conducting gland plate 91, thereby increasing a working temperature in the sealed heating chamber 35. At least one side of the heat-conducting box 3 is provided with vacuum pipes 32 connected to the sealed heating chamber 35, and the vacuum pipes 32 are connected to the vacuum pump unit 2 through a pipeline, so that the heat-conducting box 3 is evacuated by the vacuum pump unit 2.

When thermal transfer is carried out, the heat-conducting gland plate 91 is set against the first heating mechanism 51, and the first heating mechanism 51 can play a heat conduction role to the heat-conducting box 3 via the heat-conducting gland plate 91 to increase the working temperature in the sealed heating chamber 35. In addition, the heat-conducting box 3 is arranged to abut against the heat-conducting conveyor belt 65. The heat of the second heating mechanism 52 is transferred to the heat-conducting box 3 via the heat-conducting conveyor belt 65, which can also perform heat conduction, thereby further accelerating the heating efficiency in the sealed heating chamber 35 and increasing the work temperature in the sealed heating chamber 35. Meanwhile, during the working process, the vacuum pump unit 2 will evacuate the sealed heating chamber 35 to put it in a vacuum and high-temperature working state, thereby improving the shrinkage and adsorption effect of the transfer member 92. When the transfer member 92 is vacuumized and shrinked by heat, a middle part of the transfer member 92 will shrink downward and be tightly adsorbed on an upper surface of the sheet material to be processed 8, and a periphery of the transfer member 92 will shrink downward and move and be tightly adsorbed on four sides or four sides and part of bottom surfaces of the sheet material to be processed 8. Then as the temperature rises, an image or pattern layer on the transfer member 92 will be transferred on a sheet material at a high temperature, thus producing sheet materials with patterns or designs on several sides (such as quartz sheet materials), which improves the aesthetics of the sheet materials and meets the gradually increasing product requirements of users with good practicality.

The conveying mechanism 6 is configurated to transport the heat-conducting box 6 fed from outside to a designated processing position, and transport the heat-conducting box 3 after thermal transfer to a next workstation. It can be seen that an entire sheet material movement process does not require manual handling, which effectively improves the work safety of personnel and thus improves the safety of the use of a thermal transfer device.

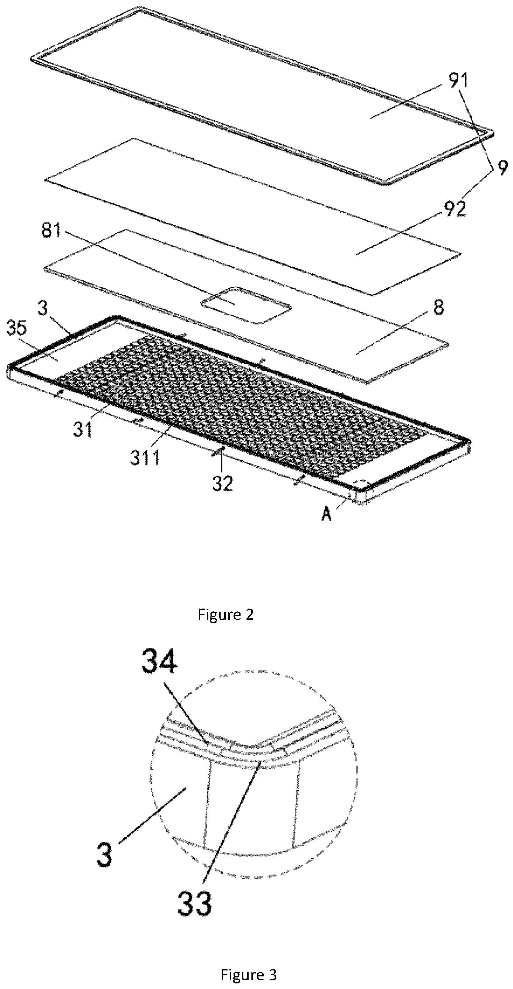

Further, as shown in Figure 2, in order to lift up the sheet material to be processed 8, protrusion arrays 31 are provided on bottom end surfaces of the heat-conducting box 3, and the protrusion arrays 31 are used to lift up the sheet material to be processed 8 to provide a movable space, so that edge areas around the transfer member 92 can move along a shape of the sheet material during contraction and adsorption, thereby realizing the transfer and hemming of four sides of the transfer member 92. The protrusion array 31 comprises a plurality of protrusions 311 arranged in an array. Preferably, in order to achieve uniform vacuuming of the heat-conducting box 3, a plurality of vacuum pipes 32 are provided at intervals on both sides of the heat-conducting box 3, and different positions of the heat-conducting box 3 are vacuumed through the plurality of vacuum pipes 32 to improve the uniformity of vacuuming and ensure that the transfer members 92 at different positions can initially shrink evenly and be adsorbed on the sheet material.

Preferably, in order to achieve uniform vacuuming of the heat-conducting box 3, a plurality of vacuum pipes 32 are provided at intervals on both sides of the heat-conducting box 3, and different positions of the heat-conducting box 3 are vacuumed through the plurality of vacuum pipes 32 to improve the uniformity of vacuuming and ensure that the transfer members 92 at different positions can initially shrink evenly and be adsorbed on the sheet material.

In order to improve a sealing effect of the heat-conducting box 3, as shown in Figures 2 to 3, an upper portion of the heat-conducting box 3 is provided with at least one sealing installation groove 33 surrounding an opening, and at least one sealing ring 34 is provided in the sealing installation groove 33. During thermal transfer, a heating surface of the first heating mechanism 51 will press the sealing ring 34 and abut against the heat-conducting box 3. The sealing ring 34 can further improve the sealing effect of the heat-conducting box 3 and prevent air from entering the sealed heating chamber 35 to affect the thermal transfer effect.

Preferably, in order to improve a multi-sided transfer effect of the sheet material to be processed 8, the transfer member 92 used is a PVC film, PET film or PETG film with better thermoplasticity, but is not limited to these materials; the transfer member 92 with better thermoplasticity can better adsorb and transfer the pattern or design to side surfaces of the sheet material to be processed 8, thereby improving the multi-sided thermal transfer effect of the sheet material.

Preferably, as shown in Figure 2, the sheet material to be processed 8 is a flat sheet material with a hollow structure. When the sealed heating chamber 35 is evacuated and heated, a middle area of the transfer member 92 will shrink and move downward to an active space, and adsorb on the four inner side surfaces of a hollow opening 81 of the sheet material or on the four inner side surfaces and part of bottom surfaces. The pattern or designs on the transfer member 92 is gradually transferred to the hollow structure at high temperature, further improving the multi-sided thermal transfer effect and aesthetics of the sheet material. In other embodiments, the sheet material to be processed 8 may also be preferably a flat sheet material.

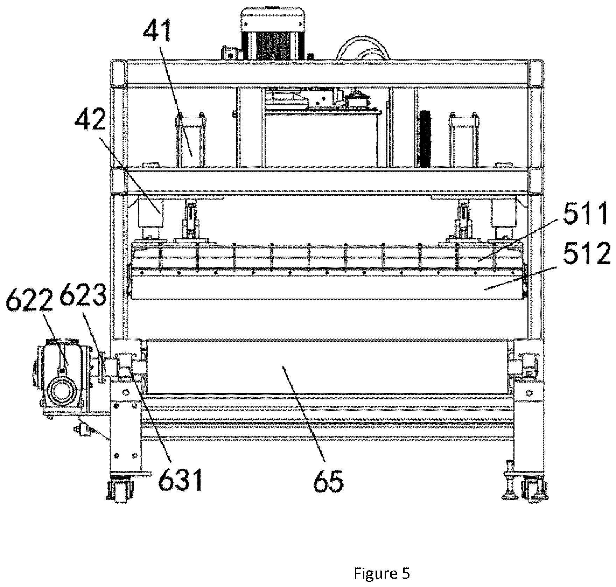

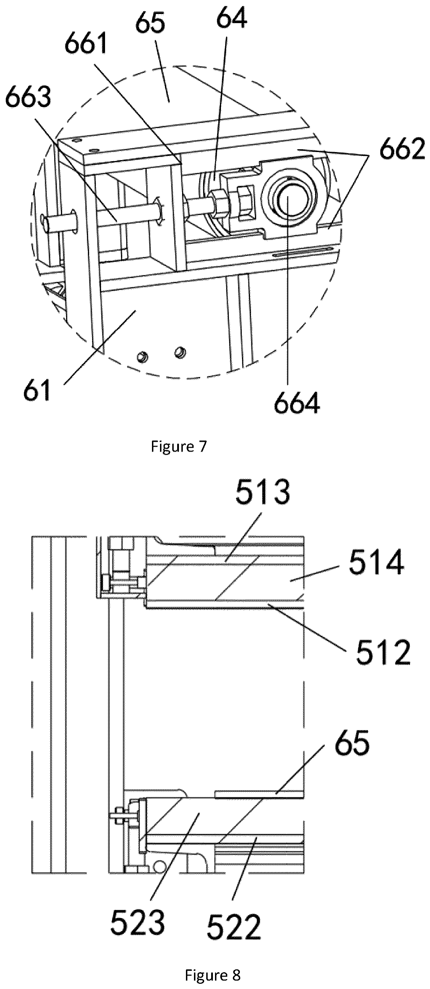

In order to achieve the conveying of sheet materials, as shown in Figures 1, 4, 5 and 7, the conveying mechanism comprises conveying frames 61, a conveying driving unit 62, a driving roller 63, a driven roller 64 and a heat-conducting conveyor belt 65; the conveying frames 61 are respectively installed on both sides of the frame 1, and the conveying frames 61 on both sides are respectively installed with the driving roller 63 and the driven roller 64, the driving roller 63 is connected with the driven roller 64 through the heat-conducting conveyor belt 65 in a transmission way, and the conveying driving unit 62 is connected with the driving roller 63 in a transmission way; an area enclosed by the heat-conducting conveyor belt 65 is provided with the second heating mechanism 52, at least one heating surface of the second heating mechanism 52 being arranged to be in contact with the heat-conducting conveyor belt 65, in order to heat up the heat-conducting box 3 on the heat-conducting conveyor belt 65. The conveying driving unit 62 is mounted on one side of the conveying frames 61 and is connected to the driving roller 63 in a transmission manner to drive the driving roller 63 to rotate, thereby driving the heat-conducting conveyor belt 65 and the driven roller 64 to rotate, and further driving the heat-conducting box located on the heat-conducting conveyor belt 65 to move, so to realize the conveying of sheet materials. Preferably, the conveying driving unit 62 comprises a driving motor 621, a reducer 622 and a coupling 623 connected in sequence, both ends of the driving roller 63 are respectively fixed on the conveying frames 61 through a bearing seat 631, and the coupling 623 is connected with one end of the driving roller 63 through a bearing part on the bearing seat 631. When the driving motor 621 works, the driving roller 63 can be driven to rotate and work, thereby realizing the conveying of the conveying mechanism 6.

In order to improve conveying stability of the heat-conducting conveyor belt 65, the conveyor mechanism 6 further comprises a tension adjustment assembly 66 arranged on both ends of the conveying frames 61 at the driven roller 64 respectively; The tension adjustment assembly 66 comprises a conveying connecting frame 661, a guide sliding plate 662 and adjusting screws 663, wherein the conveying connecting frame 661 is installed on one end of the conveying frames 61, the conveying connecting frame 661 is provided with upper and lower distributed guide sliding plates 662, a sliding bearing member 664 is provided between the upper and lower guide sliding plates 662 and is slidably connected with the sliding bearing member 664, and one end of the sliding bearing member 664 is provided with adjusting screws 663, and one end of the adjusting screws 663 passes through the conveying connecting frame 661 and is threaded with a connecting part of the conveying connecting frame 661, a bearing part of the sliding bearing member 664 is connected to the driven roller 64. By adjusting the adjusting screws 663 on both sides, the sliding bearing member 664 can be driven to move along a guide rail direction of the guide sliding plates 662 to adjust a position of the driven roller 64, thereby adjusting a tension of the heat-conducting conveyor belt 65, keeping the heat-conducting conveyor belt 65 tight and uniform, ensuring smooth flow of stone sheet materials in a conveying process, and improving transmission efficiency of the heat-conducting conveyor belt 65 and prolonging service life of the heat-conducting conveyor belt 65.

In order to realize stable lifting and lowering movement, as shown in Figures 1 to 2 and 4 to 5, a plurality of lifting driving mechanisms 4 are respectively provided around the frame 1, and the lifting driving mechanisms 4 comprise at least one lifting driving unit 41 mounted on the frame 1, and at least one guide rod 42, one end of the guide rod is connected to the first heating mechanism 51 through a guide seat sleeve of the frame 1, and driving rods 411 of the lifting driving unit 41 is connected to the first heating mechanism 51. When the four lifting driving units 41 drive the first heating mechanism 51 to move up and down, the guide rod 42 can play a guiding role to ensure that the first heating mechanism 51 stably performs a lifting movement, so that the heating surface of the first heating mechanism 51 and the heat-conducting gland plate 91 are tightly abutted, which strengthens a sealing effect of the sealed heating chamber 35 in one aspect, and on the other aspect plays a heat conduction role on the heat-conducting box 3 and the sealed heating chamber 35, thereby improving heating efficiency.

Preferably, in this embodiment, the lifting driving unit 41 adopts a driving oil cylinder, but is not limited to this material, and in other embodiments a driving electric cylinder or a driving cylinder may also be used.

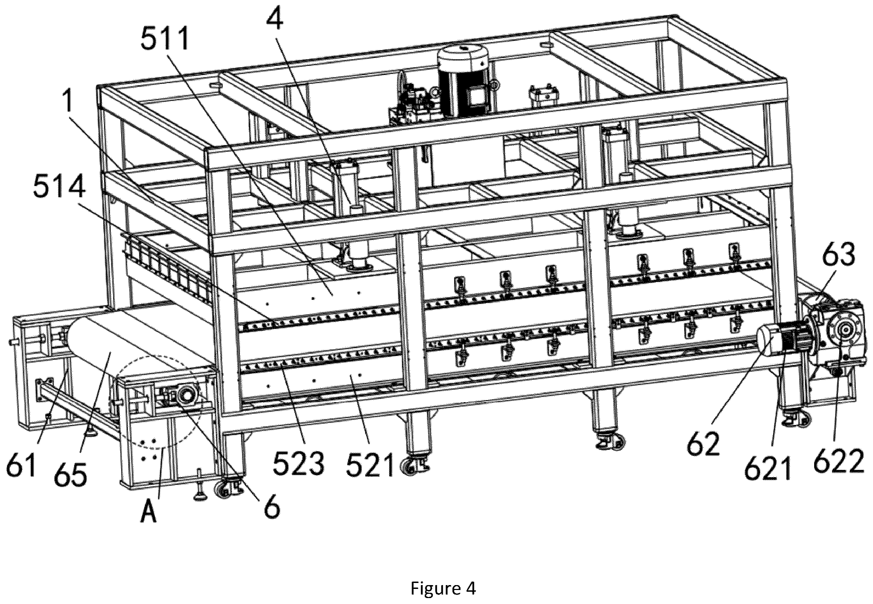

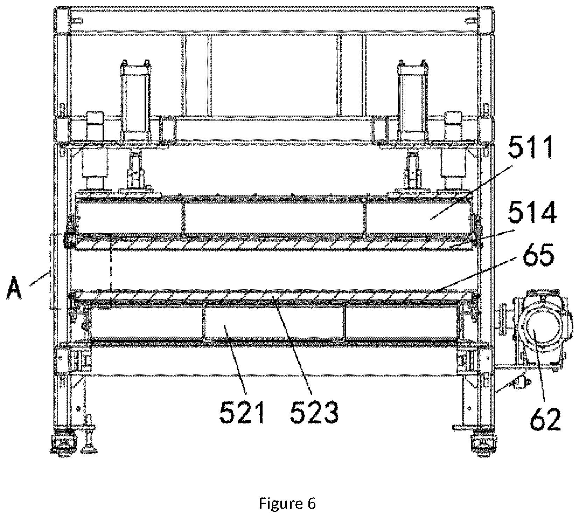

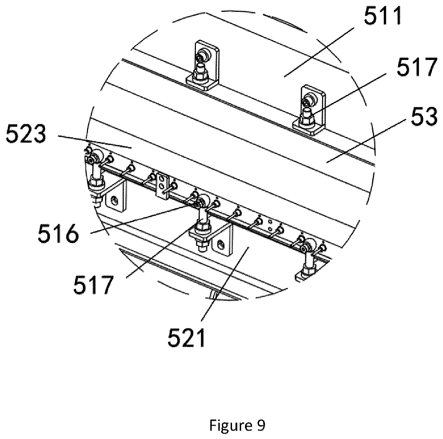

Further, as shown in Figures 4 to 6 and Figures 8 to 9, the first heating mechanism 51 comprises an upper heat-conducting frame 511 connected to the driving rods 411 of the lifting driving mechanisms 4, a heat-conducting layer member 512 is provided at a lower portion of the upper heat-conducting frame 511, a heating installation area 515 is formed between the upper heat-conducting frame 511 and the heat-conducting layer member 512, a first insulation layer plate 513 and a first electric heat-conducting plate 514 are provided in the heating installation area 515, and two ends of the first electric heat-conducting plate 513 are respectively arranged to abut the first insulation layer plate 513 and the heat-conducting layer member 512. By providing the first insulation layer plate 513, heat dissipation performance of the first electric heat-conducting plate 514 in other directions can be reduced, so that more heat is conducted at the heat-conducting box through the heat-conducting layer member 512 and the heat-conducting gland plate, thereby improving temperature rising efficiency and heat transfer effects.

Preferably, a plurality of universal joints 516 are provided at both ends of the first electric heat-conducting plate 514 at intervals, and screws 517 are installed at both ends of the universal joint 516, and both ends of the universal joints 516 are respectively connected to the upper heat-conducting frame 511 and the first electric heat-conducting plate 514 through the screws 517, so to realize a fixed connection between the upper heat-conducting frame 511 and the first electric heat-conducting plate 514. A connection mode of the universal joints 516 are not prone to affect a change of mounting hole positions due to characteristics of thermal expansion and cold contraction of the first electric heat-conducting plate 514, so that connection firmness of the first electric heat-conducting plate 514 is improved, and a normal operation of the first electric heat-conducting plate 514 is avoided from being affected, thereby reducing an influence on operation of the present device and ensuring safe operation of the present device.

Further, the second heating mechanism 52 comprises a lower heat-conducting frame 521 arranged in an area surrounded by the heat-conducting conveyor belt 65, the lower heat-conducting frame 521 is installed on the frame, a second insulation layer plate 522 and a second electric heat-conducting plate 523, and the second insulation layer plate 522 and the second electric heat-conducting plate 523 are installed on the lower heat-conducting frame 521, and two ends of the second electric heat-conducting plate 523 are respectively abutted against the second insulation layer plate 522 and the upper heat-conducting conveyor belt 65. By providing the second insulation layer plate 522, the heat dissipation performance of the second electric heat-conducting plate 523 in other directions can be reduced, so that more heat can be conducted on the heat-conducting box 3 through the heat-conducting conveyor belt 65, thereby improving temperature rising efficiency and heat transfer effects. Preferably, a plurality of universal joints 516 are provided at both ends of second electric heat-conducting plate 523 at intervals, and the screws 517 are installed at both ends of the universal joint 516, and both ends of the universal joints 516 are respectively connected to the lower heat-conducting frame 521 and the second electric heat-conducting plate 523 through the screws 517, so to realize a fixed connection between the lower heat-conducting frame 521 and the second electric heat-conducting plate 523. A connection mode of the universal joints 516 are not prone to affect a change of mounting hole positions due to characteristics of thermal expansion and cold contraction of the second electric heat-conducting plate 523, so that connection firmness of the second electric heat-conducting plate 523 is improved, and a normal operation of the second electric heat-conducting plate 523 is avoided from being affected, thereby reducing an influence on operation of the present device and ensuring safe operation of the present device.

An insulation protection plate 53 is provided at electrical connection lines on both sides of the first electric heat-conducting plate 514 and the second electric heat-conducting plate 523 to play a protective role. By adopting the electric heating mode, thermal conductivity and heat preservation performance can be improved, with advantages of environmental protection, no pollution, good electric intelligent temperature control effect and saving production cost.

Preferably, both the heat-conducting layer member and the heat-conducting conveyor belt 65 are thermally conductive belts, but are not limited to this material.

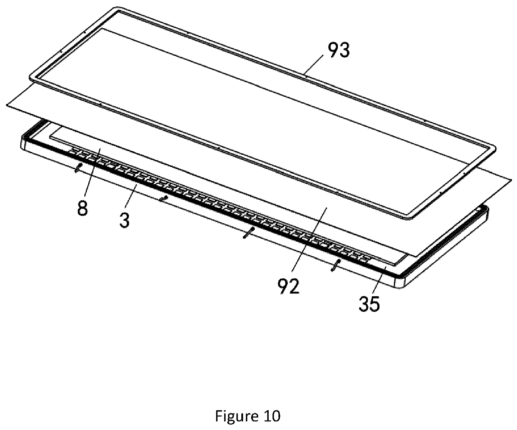

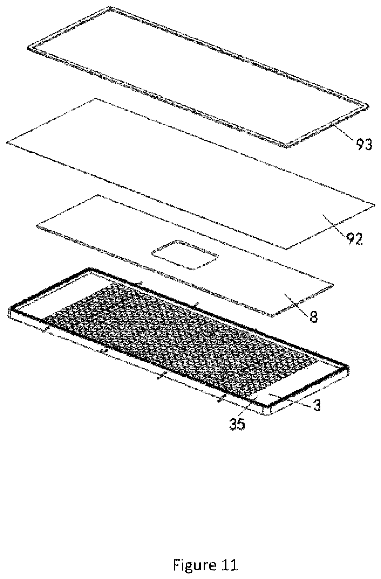

As shown in Figures 10 to 11, a schematic diagram of the structure of the vacuum thermal transfer device for sheet materials according to a second embodiment of the present invention is further provided. This embodiment is different from the first embodiment shown in Figure 2 in that the transfer assembly 9 comprises a heat-conducting hollow frame 93 and involves a transfer member 92, and the transfer member 92 is laid on the heat-conducting box 3, and the horizontal dimension of the transfer member 92 is greater than or equal to the dimension of the heat-conducting box 3; the heat-conducting hollow frame 93 presses the transfer member 92 onto the heat-conducting box 3 to enclose and form the sealed heating chamber 35.

When thermal transfer is performed, the heat-conducting hollow frame 93 is arranged to be in contact with the first heating mechanism. The first heating mechanism 51 can conduct heat to the transfer member 92 and the heat-conducting box 3 through the heat-conducting hollow frame 93, and conduct heat to the transfer member 92 through air in the heat-conducting hollow frame 93, increasing the working temperature in the sealed heating chamber 35. Further, the heat-conducting box 3 is arranged to be in contact with the heat-conducting conveyor belt 65, and the second heating mechanism conducts heat to the heat-conducting box 3 through the heat-conducting conveyor belt, which can also conduct heat, thereby further accelerating the heating efficiency in the sealed heating chamber 35 and increasing the working temperature in the sealed heating chamber 35. Meanwhile, during a working process, the vacuum pump unit will evacuate the sealed heating chamber 35 to put the sealed heating chamber 35 in a vacuum and high-temperature working state, thereby improving shrinkage and adsorption effects of the transfer member 92. When the transfer member 92 surrounded by the heat-conducting hollow frame 93 is evacuated and shrinks due to heat, the transfer member 92 will be stretched downward as a whole and tightly adsorbed on an upper surface of the sheet material to be processed 8. The transfer member 92 located in the sealed heating chamber 35 will also be stretched and moved downward and tightly adsorbed on four side surfaces or the four side surfaces and part of the bottom surfaces of the sheet material to be processed 8. Then, as temperature rises, pattern or design layers on the transfer member 92 will be transferred to a high-temperature sheet material, thereby producing a sheet material (such as a quartz sheet material) with patterns or designs on multiple surfaces, allowing sheet materials aesthetically pleasing and satisfying the gradually increasing requirements of users, and making the sheet material practical.

According to the embodiments of the present invention, a sealed heating chamber can be formed by a combination of a heat-conducting box and a heat-conducting assembly. The lifting driving mechanisms and the first heating mechanism can exert pressure on the heat-conducting assembly to facilitate the sealing connection between the heat-conducting box and the heat-conducting assembly, thereby avoiding the stable operation of a vacuum thermal transfer work being affected by air leakage. Under the joint action of the first heating mechanism, the second heating mechanism and the vacuum pump unit, the sealed heating chamber can be kept in a vacuum and high-temperature working state, thereby improving the efficiency of thermal transfer processing. The transfer member in this environment will shrink due to heat and be adsorbed on upper surfaces and other multiple side surfaces of lifted sheet materials to be processed, thereby realizing image or pattern transfer on multiple surfaces of the sheet material to be processed, allowing sheet materials aesthetically pleasing and satisfying the gradually increasing requirements of users, and making the sheet material practical. In addition, the conveying mechanism can transport the heat-conducting box fed from outside to a designated processing position, and transport the heat-conducting box after thermal transfer to a next workstation. It can be seen that an entire sheet material movement process does not require manual handling, which effectively improves the work safety of personnel and thus improves the safety of the use of a thermal transfer device.

The above description is a preferred embodiment of the present invention. It is obvious to those skilled in the art that several improvements and modifications may be made without departing from the present invention, and these improvements and modifications also fall within the scope of protection of the present invention.

## Claims

1. A vacuum thermal transfer device for sheet materials comprising a frame, a vacuum pump unit, a heat-conducting box and a transfer assembly, wherein the frame is provided with lifting driving mechanisms, at least one heating mechanism, and at least one conveying mechanism, the heating mechanism comprises a first heating mechanism and a second heating mechanism;
the first heating mechanism is provided above a heat-conducting conveyor belt of the conveying mechanism, and the heat-conducting conveyor belt of the conveying mechanism is arranged to be in contact with at least one heating surface of the second heating mechanism provided below the heat-conducting conveyor belt;
the heat-conducting box is positioned on the heat-conducting conveyor belt, the transfer assembly is covered over the heat-conducting box to enclose and form a sealed heating chamber, at least one sheet material to be processed is arranged to be jacked up in the sealed heating chamber, and a transfer member in the transfer assembly is arranged to be positioned above the sheet material to be processed;
the lifting driving mechanisms are connected to the first heating mechanism for driving the first heating mechanism to move and abut against the transfer assembly;
at least one side of the heat-conducting box is provided with vacuum pipes connected to the sealed heating chamber, and the vacuum pipes are connected to the vacuum pump unit through a pipeline.

2. The vacuum thermal transfer device for sheet materials according to claim 1, wherein the transfer assembly comprises a heat-conducting gland plate and involves a transfer member, the heat-conducting gland plate being covered over the heat-conducting box to enclose and form the sealed heating chamber;
the transfer member is arranged to be provided in the sealed heating chamber and arranged to be laid on the sheet material to be processed, and a horizontal dimension of the transfer member is greater than the horizontal dimension of the sheet material to be processed.

3. The vacuum thermal transfer device for sheet materials according to claim 1, wherein the transfer assembly comprises a heat-conducting hollow frame and involves a transfer member, with the transfer member being arranged to be laid on the heat-conducting box and the transfer member having a horizontal dimension greater than or equal to the dimension of the heat-conducting box; the heat-conducting hollow frame is arranged to press the transfer member onto the heat-conducting box to enclose and form the sealed heating chamber.

4. The vacuum thermal transfer device for sheet materials according to claim 1, wherein a bottom end surface within the heat-conducting box is provided with protrusion arrays configured to jack up the sheet material to be processed, the protrusion arrays comprising a plurality of projections arranged in an array.

5. The vacuum thermal transfer device for sheet materials according to claim 1, wherein a plurality of vacuum pipes are provided at intervals on one side or both sides of the heat-conducting box.

6. The vacuum thermal transfer device for sheet materials according to claim 1, wherein an upper portion of the heat-conducting box is provided with at least one sealing installation groove surrounding an opening of the heat-conducting box, and at least one sealing ring is provided in the sealing installation groove.

7. The vacuum thermal transfer device for sheet materials according to any one of claims 1 to 3, wherein the transfer member is a PVC film, a PET film or a PETG film with a pattern or a design; the sheet material to be processed is a flat sheet material or a flat sheet material with a hollow structure.

8. The vacuum thermal transfer device for sheet materials according to any one of claims 1 to 6, wherein the conveying mechanism is configured to convey a fed heat-conducting box to a designated processing position and convey the heat-conducting box after thermal transfer outward, the conveying mechanism comprising conveying frames, a conveying driving unit, a driving roller, a driven roller and a heat-conducting conveyor belt;
the conveying frames are respectively installed on both sides of the frame, and the conveying frames on both sides are respectively installed with the driving roller and the driven roller, the driving roller is connected with the driven roller through the heat-conducting conveyor belt in a transmission way, and the conveying driving unit is connected with the driving roller in a transmission way; an area enclosed by the heat-conducting conveyor belt is provided with the second heating mechanism, at least one heating surface of the second heating mechanism being arranged to be in contact with the heat-conducting conveyor belt.

9. The vacuum thermal transfer device for sheet materials according to any one of claims 1 to 6, wherein a plurality of the lifting drive mechanisms are provided around the frame, the lifting driving mechanisms comprising lifting driving units mounted on the frame, driving rods of the lifting drive units being connected to said first heating mechanism;
the first heating mechanism comprises an upper heat-conducting frame connected to the driving rods of the lifting driving mechanisms, a heat-conducting layer member is provided at a lower portion of the upper heat-conducting frame, a heating installation area is formed between the upper heat-conducting frame and the heat-conducting layer member, a first insulation layer plate and a first electric heat-conducting plate are provided in the heating installation area, and two ends of the first electric heat-conducting plate are respectively arranged to abut the first insulation layer plate and the heat-conducting layer member.

10. The vacuum thermal transfer device for sheet materials according to claim 8, wherein the second heating mechanism comprises a lower heat-conducting frame installed on the frame, and a second insulation layer plate and a second electric heat-conducting plate are installed on the lower heat-conducting frame, and two ends of the second electric heat-conducting plate are respectively arranged to abut against the second insulation layer plate and the upper heat-conducting conveyor belt.
